# EUROPEAN PATENT APPLICATION

(11) **EP 4 382 958 A1**
(43) Date of publication of application: **12.06.2024**
(21) Application number: 22859847.0
(22) Date of filing: 17.03.2022
(51) Int. Cl.: G01S 7/486, G01S 7/484, G01S 17/89

(54) **LASER RADAR AND METHOD FOR PERFORMING THREE-DIMENSIONAL DETECTION USING SAME**

(30) Priority: 26.08.2021 CN 202110985818
(71) Applicant: Hesai Technology Co., Ltd., Shanghai 201821 (CN)
(72) Inventor: ZHAO, Shensen, Shanghai 201821 (CN); LI, Li, Shanghai 201821 (CN); YANG, Jin, Shanghai 201821 (CN); XIAO, Yong, Shanghai 201821 (CN); XIANG, Shaoqing, Shanghai 201821 (CN)
(74) Representative: Fish & Richardson P.C.
(86) International application number: PCT/CN2022/081302
(87) International publication number: WO 2023/024492

(57) **Abstract**

This disclosure provides a LiDAR, including: a transmitter device configured to transmit a detection pulse with changeable intensity; a receiver device configured to receive an optical signal and be applied with a bias voltage to convert the optical signal into an electrical signal; and a controller device configured to control the intensity of the detection pulse, apply a bias voltage to the receiver device, and switch the bias voltage from a first bias voltage to output a second bias voltage based on the time point of transmission of the detection pulse, wherein the detection performance of the receiver device at the first bias voltage is lower than the detection performance at the second bias voltage. Through this disclosure, suppression of interference from stray light inside the LiDAR can be improved, the crosstalk generated in bias voltage switching can be suppressed, and the detection capability of the receiver device can be quickly restored. The bias voltage is changed based on the intensity of the detection pulse, an obstacle distance, an obstacle reflectivity, and a detection distance, the saturation of the receiver device can be avoided and the dynamic range can be expanded.

## Description

### TECHNICAL FIELD

This disclosure relates to the field of photoelectric detection, and in particular to light detection and rangings ("LiDARs") and methods of three-dimensional detection using LiDAR.

### BACKGROUND

LiDAR is a commonly used ranging sensor with the advantages of long detection range, high resolution, strong anti-interference capability, small size, light weight, or the like and is widely used in fields of intelligent robots, drones, autonomous driving, or the like. LiDAR includes a laser transmitting system and a detecting and receiving system. The transmitted laser is reflected after encountering the target and is received by the detecting and receiving system. By measuring the round trip time of the laser, the distance between the target and the LiDAR can be measured (time of flight method). After the whole target area is scanned and detected, three-dimensional imaging can finally be achieved.

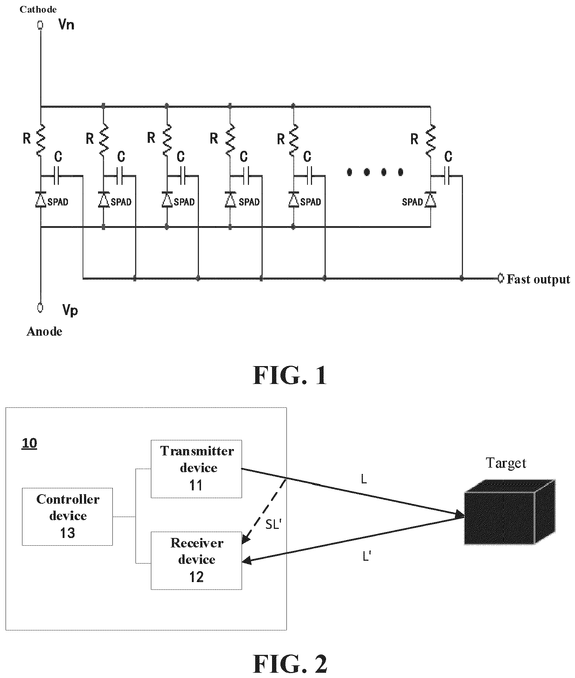

In the laser transmitting system, and the detecting and receiving system of the LiDAR, in addition to the designed receiving and transmitting light path, there is also a stray light transmission path inside the LiDAR. When the laser is transmitted, internal stray light is incident on the detector, which causes interference to the detector at the light emission time. As the technological level of silicon photomultiplier ("SiPM") continuously rises, multi-line LiDAR increasingly uses SiPM arrays as light receiver devices. As shown in Fig. 1, SiPM is alight receiver device including multiple single photon avalanche diodes ("SPADs"). The operating process of SiPM is as follows: when a single photon is incident on a pixel of the SiPM, if the photon is detected by the pixel, a Geiger avalanche is caused in the SPAD of the SiPM. The charge accumulated in the junction capacitor of the SPAD flows from the P electrode to the N electrode through the avalanche effect, causing the bias across the SPAD to drop, and the Geiger avalanche of the SPAD stops. The voltage change ΔV across the SPAD is output through the fast output capacitor C, and then both ends of the SPAD j unction capacitor are charged through the quenching resistor R, causing the SPAD to be restored to Geiger mode. Only when the SPAD restored to the Geiger mode, it can continue to respond to the next photon. The time during which the quenching resistor R charges the SPAD junction capacitor is the recovery time of the device.

Because SiPM uses a limited number of SPAD units to form a receiver device, it is prone to saturation for strong light input. Therefore, the stray light inside the LiDAR can cause a large number of SPAD units to be activated by the avalanche, causing receiving capabilities to decline and need a particular amount of time to recover. During this period, stray light can be superimposed on the signal baseline, and the signal baseline can deviate from its original position, causing the signal baseline to fluctuate in response to the stray light. In summary, due to the interference caused by stray light to the SiPM, the short-range detection capability can be reduced, and the strong stray light results in a too small number of deactivated SPADs, causing the inability to recognize the echo signal, thus forming a short-range blind zone.

To suppress the interference of stray light on the SiPM, the photon detection efficiency (PDE) is typically reduced by reducing the bias voltage applied to the SiPM; or the light emission power is reduced, so that the stray light can become weaker during light emission, thus reducing the impact on the baseline, fewer SPAD units in the SiPM are activated, thereby reducing the saturation effect of the SiPM. However, low responsivity and low light emission power can cause the problem of reduced long-range detection performance of the LiDAR.

The contents of the background section are only technologies known to the public and do not necessarily represent the related art in the field.

### SUMMARY

To solve the problem in the existing techniques that the detector is interfered by internal stray light, causing the LiDAR to have a short-range blind zone or affecting the ability of short-range target detection, this disclosure provides a LiDAR and a method of three-dimensional detection using LiDAR to eliminate or mitigate the interference and impact from internal stray light.

This disclosure provides a LiDAR, including:
a transmitter device configured to transmit a detection pulse with changeable intensity;
a receiver device configured to receive an optical signal and be applied with a bias voltage to convert the optical signal into an electrical signal; and
a controller device configured to control the intensity of the detection pulse, apply a bias voltage to the receiver device, and switch the bias voltage from a first bias voltage to output a second bias voltage based on the time point of transmission of the detection pulse. The detection performance of the receiver device at the first bias voltage is lower than the detection performance at the second bias voltage.

Based on an aspect of this disclosure, the controller device is configured to switch the bias voltage from the first bias voltage to output the second bias voltage based on a nonlinear curve.

Based on an aspect of this disclosure, the controller device is configured to change one or more of the first bias voltage and the second bias voltage based on one or more of the intensity of the detection pulse, an obstacle distance, an obstacle reflectivity, and a detection distance.

Based on an aspect of this disclosure, the controller device includes a bias generator unit and a bias switcher unit. The bias generator unit is configured to output the first bias voltage and the second bias voltage. The bias switcher unit is coupled with the bias generator unit and is configured to switch to output the first bias voltage or the second bias voltage based on the time point of transmission of the detection pulse.

Based on an aspect of this disclosure, the bias switcher unit is configured to output the first bias voltage before the detection pulse is transmitted and switch slowly to the second bias voltage after the detection pulse is transmitted.

Based on an aspect of this disclosure, the controller device further includes a delay output unit, the delay output unit is coupled with the bias generator unit and the receiver device and configured to output the second bias voltage to the receiver device in place of the bias switcher unit when the bias switcher unit outputs the second bias voltage.

Based on an aspect of this disclosure, the bias switcher unit includes a low-side driver and an output capacitor. The low-side driver is configured to switchably output the first bias voltage and the second bias voltage. The output capacitor is coupled between an output of the low-side driver and the receiver device and configured to slowly switch the bias voltage from the first bias voltage to the second bias voltage.

Based on an aspect of this disclosure, the bias switcher unit further includes a first resistor and a first capacitor. The low-side driver includes an amplifier. A non-inverting input of the amplifier is coupled to a control signal through the first capacitor. The control signal is associated with the time point of transmission of the detection pulse. The first resistor is connected in series between the non-inverting input and the inverting input of the amplifier. The second bias voltage is applied to the inverting input of the amplifier. The first voltage input and the second voltage input of the amplifier receive the first bias voltage and the second bias voltage, respectively. When the voltage across the first resistor is higher than a threshold, the amplifier outputs the first bias voltage through the first voltage output; otherwise, the amplifier outputs the second bias voltage through the second voltage output.

Based on an aspect of this disclosure, the first voltage output of the amplifier is coupled to the receiver device and the output capacitor through a first driving resistor, and the second voltage output of the amplifier is coupled to the receiver device and the output capacitor through a second driving resistor.

Based on an aspect of this disclosure, the delay output unit includes a first switch, a second switch, and a second resistor. The gate of the first switch is coupled to the control signal through the first capacitor. The source of the first switch is coupled to the bias generator unit to receive the second bias voltage. The drain of the first switch is coupled to the bias generator unit through the second resistor to receive the first bias voltage and is connected to the gate of the second switch. The source of the second switch is coupled to the bias generator unit to receive the second bias voltage, and the drain of the second switch is coupled to the receiver device.

Based on an aspect of this disclosure, the receiver device includes a plurality of receiver units. The bias switcher unit includes an address input. The bias switcher unit is configured to select at least one receiver unit in the receiver device based on an address signal from the address input, and switch to output the second bias voltage.

Based on an aspect of this disclosure, the controller device is configured to slowly switch to the second bias voltage after the detection pulse is transmitted.

Based on an aspect of this disclosure, the controller device is configured to change the second bias voltage based on the intensity of the previous echo, and decrease the second bias voltage as the intensity of the previous echo increases.

Based on an aspect of this disclosure, the controller device is configured to calculate the obstacle distance based on the electrical signal, and the bias applicator unit is configured to change the second bias voltage based on the obstacle distance, and decrease the second bias voltage as the obstacle distance decreases.

Based on an aspect of this disclosure, the controller device is configured to change the first bias voltage based on the intensity of the detection pulse, and increase the first bias voltage as the intensity of the detection pulse decreases.

Based on an aspect of this disclosure, the receiver device includes a SiPM array. The SiPM array outputs the electrical signal via the cathode, and the anode of the SiPM array is coupled to the controller device to receive the first bias voltage or the second bias voltage; or the SiPM array outputs the electrical signal via a fast output, and the cathode of the SiPM array is coupled to the controller device to receive the first bias voltage or the second bias voltage.

Based on an aspect of this disclosure, the receiver device includes a plurality of SiPM arrays and uses the cathode for output, and the plurality of SiPM arrays are connected to the controller device with a common anode to receive the first bias voltage or the second bias voltage.

This disclosure further provides a method of three-dimensional detection using LiDAR, including:
S101: transmitting a detection pulse to the outside of the LiDAR. The intensity of the detection pulse is changeable;
S102: switching the bias voltage of a receiver device of the LiDAR from a first bias voltage to output a second bias voltage based on the time point of transmission of the detection pulse, the detection performance of the receiver device at the first bias voltage is lower than the detection performance at the second bias voltage; and
S103: receiving an echo of the detection pulse reflected from an obstacle and converting it into an electrical signal by the receiver device.

Based on an aspect of this disclosure, the step S102 includes switching the bias voltage from the first bias voltage to output the second bias voltage based on a nonlinear curve.

Based on an aspect of this disclosure, the method further includes changing one or more of the first bias voltage and the second bias voltage based on one or more of the intensity of the detection pulse, an obstacle distance, an obstacle reflectivity, and a detection distance.

Based on an aspect of this disclosure, the step S 102 includes outputting the first bias voltage before the detection pulse is transmitted; and slowly switching to the second bias voltage after the detection pulse is transmitted.

Based on an aspect of this disclosure, the step S 102 includes slowly switching to the second bias voltage after the detection pulse is transmitted.

Based on an aspect of this disclosure, the step S102 includes changing the second bias voltage based on the intensity of the previous echo, and decreasing the second bias voltage as the intensity of the previous echo increases.

Based on an aspect of this disclosure, the step S102 includes calculating the obstacle distance based on the electrical signal; and changing the second bias voltage based on the obstacle distance, and decreasing the second bias voltage as the obstacle distance decreases.

Based on an aspect of this disclosure, the step S 102 includes changing the first bias voltage based on the intensity of the detection pulse, and increasing the first bias voltage as the intensity of the detection pulse decreases.

Through the embodiments of this disclosure, the effect of stray light suppression can be improved by slow rise of the voltage, that is, by slowly switch the first bias voltage to the second bias voltage. The bias voltage is changed based on the intensity of the detection pulse, the crosstalk to the baseline of the electrical signal is smaller, and the waiting time in response to and recognition of the signal is shortened. Therefore, the crosstalk due to bias voltage switching can be suppressed and the receiving capability of the receiver device can be restored quickly. The bias voltage is changed based on the intensity of the detection pulse, the detection distance, the obstacle distance, and the obstacle reflectivity, the saturation of the receiver device can be avoided and the dynamic range of the receiver device can be expanded.

### DESCRIPTION OF THE DRAWINGS

The drawings forming a part of this disclosure are intended to provide further understanding of this disclosure. The example embodiments of this disclosure and description thereof are intended to explain this disclosure and do not make improper limitation of this disclosure. In the drawings:
Fig. 1 schematically shows the model of a SiPM device;
Fig. 2 shows a LiDAR in an embodiment of this disclosure;
Figs. 3A and 3B show timing diagrams of a detection pulse of detection laser transmitted by a LiDAR, a bias voltage, an optical signal and a corresponding electrical signal in different embodiments of this disclosure;
Fig. 4 shows a schematic diagram of the process of switching the bias voltage of a SiPM based on the time point of light emission;
Fig. 5 shows a block diagram of a controller device in an embodiment of this disclosure;
Fig. 6 shows a block diagram of a bias generator unit in an embodiment of this disclosure;
Fig. 7 shows a block diagram of a controller device in a preferred embodiment of this disclosure;
Fig. 8 shows the connection mode of SiPM arrays in an embodiment of this disclosure;
Fig. 9 shows a block diagram of a controller device in another embodiment of this disclosure;
Fig. 10 shows the specific circuit structure of a bias switcher unit and a delay output unit in an embodiment of this disclosure;
Fig. 11 shows a control timing diagram of the bias switcher unit in the embodiment of Fig. 10;
Fig. 12 shows a control timing diagram of the delay output unit in the embodiment of Fig. 10;
Fig. 13 shows the connection mode of SiPM arrays in a different embodiment of this disclosure;
Fig. 14 shows a schematic diagram of a receiver device and a bias switcher unit in another embodiment of this disclosure;
Fig. 15 shows a control timing diagram of signal switching in Fig. 14; and
Fig. 16 shows a method of three-dimensional detection using LiDAR in an embodiment of this disclosure.

### DETAILED DESCRIPTION

In the following, only some example embodiments are briefly described. As appreciated by those skilled in the art, the described embodiments may be modified in various different ways, without departing from the spirit or scope of this disclosure. Accordingly, the drawings and description are to be regarded as illustrative and not limiting in nature.

In the description of this disclosure, it is to be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", or the like, is based on the orientation or position relationship shown in the drawings, and is intended only to facilitate and simplify the description of this disclosure, and is not intended to indicate or imply that a device or element referred to must have a particular orientation, be constructed and operated in a particular orientation, and therefore should not be construed as limitation of this disclosure. In addition, the terms "first" and "second" are used merely for the purpose of description and shall not be understood as indicating or implying relative importance or implicitly indicating the number of technical features indicated. Therefore, features defined by "first" and "second" may explicitly or implicitly include one or more of the recited features. In the description of this disclosure, "a plurality of" means two or more, unless otherwise specifically defined.

In the description of this disclosure, it is to be noted that, unless otherwise expressly specified and defined, the terms "mounting", "linking", or "connection" should be understood in a broad sense, for example, as a fixed connection, a removable connection, or an integral connection; a mechanical connection, an electrical connection, or communication with each other; a direct connection, or an indirect connection through an intermediate medium; or internal communication between two elements or interaction between two elements. For those of ordinary skill in the art, the specific meanings of the above terms in this disclosure can be understood based on specific situations.

In this disclosure, unless otherwise expressly specified and defined, a first feature being "above" or "below" a second feature may include direct contact between the first and second features, and may also include, instead of direct contact, contact between the first and second features through an additional feature between them. Furthermore, a first feature being "on", "above", or "over" a second feature includes the first feature being directly above or obliquely above the second feature, or simply means that the height of the first feature in horizontal direction is higher than that of the second feature. A first feature being "under", "below", or "beneath" a second feature includes the first feature being directly below or obliquely below the second feature, or simply means that the height of the first feature in horizontal direction is lower than that of the second feature.

The following disclosure provides many different embodiments or examples for implementing various structures of this disclosure. To simplify the description of this disclosure, the components and arrangements of specific examples are described below. Of course, they are merely examples and are not intended to limit this disclosure. Furthermore, one or more of reference numbers and reference letters may be repeated in different examples in this disclosure, and such repetition is intended for purposes of simplicity and clarity and does not itself indicate a relationship among the various embodiments, or arrangements discussed, or the various embodiments and arrangements discussed. In addition, this disclosure provides examples of various specific processes and materials, but the application of other processes, or the use of other materials, or the application of other processes and the use of other materials can occur to those of ordinary skill in the art.

As shown in Fig. 2, in a LiDAR, a part of the light beam emitted from the transmitter device 11 may be directly incident on the receiver device 12 after one or more reflections inside the LiDAR. The stray light SL' formed by the part of the light beam is also received and converted into an electrical signal by the receiver device 12, causing problems such as the short-range blind zone of the LiDAR or affecting the capability of short-range target detection.

To avoid or mitigate the impact of the stray light, this disclosure provides a LiDAR and a method of three-dimensional detection using LiDAR. The receiver device of the LiDAR typically operates at a particular bias voltage, and its detection performance is associated with the bias voltage. Within a particular range, the higher the bias voltage, the higher the detection performance. Therefore, the discloser of this disclosure conceived that the bias voltage of the receiver device of the LiDAR can be dynamically changed based on the time point of transmission of the detection pulse of the LiDAR. For example, the bias voltage of the receiver device can be changed to be low before the time point of transmission of the detection pulse, reducing the response of the receiver device to the stray light. After the time point of transmission of the detection pulse, the bias voltage of the receiver device is gradually restored to the normal operating voltage, so that its responsiveness is restored to the normal level to receive the echo signal, thereby suppressing the interference of the stray light on the receiver device, and suppressing the effect of crosstalk due to bias switching on the baseline. In this disclosure, "bias voltage" and "bias" are used interchangeably. Through the embodiments of this disclosure, the effect of stray light suppression can be improved by slow rise of the voltage, that is, by slowly switching the first bias voltage to the second bias voltage. The bias voltage is changed based on the intensity of the detection pulse, the crosstalk to the baseline of the electrical signal is smaller, and the waiting time in response to and recognition of the signal is shortened. Therefore, the crosstalk due to bias voltage switching can be suppressed and the receiving capability of the receiver device can be restored quickly. The bias voltage is changed based on the intensity of the detection pulse, the detection distance, the obstacle distance, and the obstacle reflectivity, the saturation of the receiver device can be avoided and the dynamic range of the receiver device can be expanded.

Fig. 2 shows a LiDAR 10 in an embodiment of this disclosure, which is described in detail below with reference to Fig. 2.

As shown in Fig. 2, the LiDAR 10 includes a transmitter device 11, a receiver device 12, and a controller device 13. The transmitter device 11 includes, for example, a laser that is configured to transmit a detection pulse L. The intensity of the detection pulse L is changeable, for example, it can be changed based on parameters such as the detection distance, the obstacle distance, and the obstacle reflectivity, or the like. In an embodiment of this disclosure, when the detection distance is farther, the intensity of the detection pulse L is higher, and when the detection distance is closer, the intensity of the detection pulse L is lower. The receiver device 12 is configured to receive an optical signal and is applied with a bias voltage to convert the optical signal into an electrical signal. The receiver device 12 operates at a particular bias voltage, and its detection performance is associated with the bias voltage. Within a particular range, the higher the bias voltage, the higher the detection performance. For example, the detection pulse L is reflected from an obstacle, and a part of the echo L' returns to the LiDAR. After the echo L' is received and converted into an electrical signal by the receiver device 12, parameters such as the distance, or reflectivity of the obstacle, or the distance and reflectivity of the obstacle can be calculated based on the electrical signal. As mentioned above, there also is some stray light inside the LiDAR. For example, a part of the detection pulse L transmitted from the transmitter device 11 may be directly incident on the receiver device 12 after one or more reflections inside the LiDAR, forming the stray light indicated by the reference numeral SL' in Fig. 2. The optical signal of the stray light can also be received by the receiver device 12 and converted into an electrical signal.

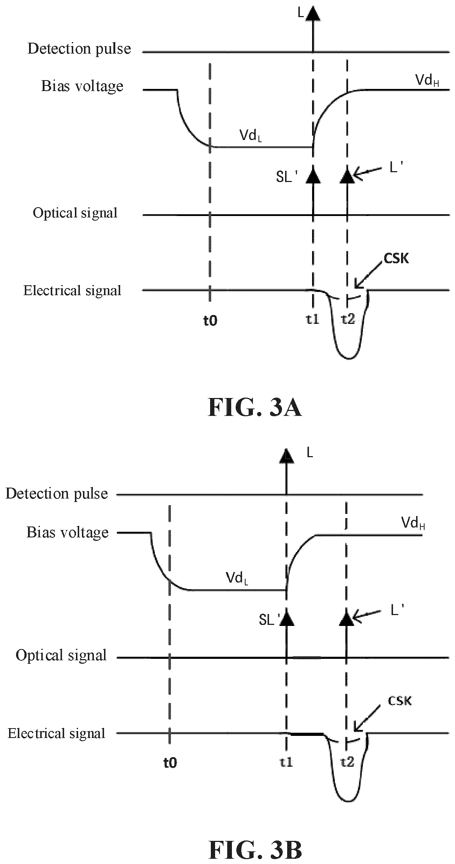

The controller device 13 is coupled with the transmitter device 11 and the receiver device 12, and is configured to control the intensity of the detection pulse L, apply a bias voltage to the receiver device 12, and switch the bias voltage from a first bias voltage to output a second bias voltage based on the time point of transmission of the detection pulse. The detection performance of the receiver device at the first bias voltage is lower than the detection performance of the receiver device at the second bias voltage. Preferably, at the first bias voltage, the receiver device has very weak responsiveness to optical signals, and the second bias voltage is the operating voltage of the receiver device. Fig. 3A shows a timing diagram of the detection pulse L of the detection laser emitted by the LiDAR 10, the bias voltage Vd, the optical signal received by the receiver device 12 and the corresponding electrical signal, which is described below with reference to Fig. 3A.

As shown in Figure 3A, at the timestamp t1, the controller device 13 controls the transmitter device 11 to transmit the detection pulse L. Within a particular period of time before the timestamp t1 (the time period t0-t1 shown in Fig. 3A), the controller device 13 sets the bias voltage of the receiver device 12 to a first bias voltage Vd_{L}. The first bias voltage Vd_{L} can, for example, be lower than the operating voltage of the receiver device 12, thereby reducing the response of the photodetector of the receiver device 12 to stray light. In a preferred embodiment of this disclosure, the first bias voltage Vd_{L} can be set to zero, that is, the photodetector of the receiver device is completely turned off, so that the responsiveness of the receiver device to optical signals is very weak. At the timestamp t1, the transmitter device 11 transmits the detection pulse L. After the detection pulse is transmitted, the controller device 13 slowly switches to the second bias voltage Vd_{H}. In this case, the controller device 13 can slowly switch the bias voltage Vd from the first bias voltage Vd_{L} to output the second bias voltage Vd_{H}. In a preferred embodiment of this disclosure, the second bias voltage Vd_{H} is, for example, the operating voltage of the receiver device 12. The LiDAR 10 typically has a preset detection distance, such as 100 meters or 200 meters. To ensure the detection distance and detection performance of the LiDAR, the second bias voltage Vd_{H} is a preset operating voltage. In addition, the second bias voltage Vd_{H} can also be changed.

As shown in Fig. 3A, at the timestamp t2, that is, when the echo L' returns to the LiDAR, the bias voltage Vd has changed from the first bias voltage Vd_{L} to close to the second bias voltage Vd_{H} and the echo L' can be responded to generate a sufficient electrical signal.

In the above embodiment, the detection performance of the photodetector of the receiver device 12 at the first bias voltage Vd_{L} is lower than the detection performance at the second bias voltage Vd_{H}, so it can be ensured that, during the time period without the echo L', such as the time period t0-t1 shown in Fig. 3A, the receiver device 12 is in an OFF or partially OFF state with almost no response to the stray light SL'; whereas during the time period where the echo L' is received, the receiver device 12 is in an ON state where it is capable of detection.

In addition, those skilled in the art can easily understand that the time point when the bias voltage Vd starts to be switched is not limited to the timestamp t1 when the transmitter device 11 transmits the detection pulse L. The bias voltage Vd can start to be switched before the timestamp t1 or after the timestamp t1. In an embodiment of this disclosure, the timestamp t1 when the detection pulse L is transmitted is used as a reference, and the bias voltage Vd starts to be switched within a preset range before or after the timestamp t1, for example, within 3 ns before or after the timestamp t1, so as to ensure that the responsiveness of the receiver device 12 to the stray light is weaker when the stray light SL' arrives at the receiver device 12. These are all within the protection scope of this disclosure. In the above embodiment of this disclosure, the bias voltage Vd of the receiver device 12 is dynamically set to the first bias voltage Vd_{L} at the timestamp of light emission t1 to reduce the responsiveness of the photodetector of the receiver device 12, and consequently reduce the responsiveness of the photodetector of the receiver device 12 to the stray light. After the timestamp of light emission t1, the bias voltage Vd is gradually switched to the second bias voltage Vd_{H}, that is, the operating voltage, so that the responsiveness is restored to the normal level to receive and respond to echoes, thereby suppressing the interference of the stray light on the SiPM and suppressing the impact of crosstalk ("CSK") due to bias switching on the baseline.

In addition, as shown in Fig. 3A, at the timestamp t2 when the echo L' arrives, the bias voltage Vd has not been completely switched to the second bias voltage Vd_{H}, as long as the bias voltage Vd at this time is sufficient to enable the receiver device 12 to detect the echo L'. Of course, the parameters can also be set so that the bias voltage Vd has been completely recovered to the second bias voltage Vd_{H} at the timestamp t2 when the echo L' arrives. These are all within the protection scope of this disclosure. As shown in Fig. 3B, at the timestamp t2, that is, when the echo L' returns to the LiDAR, the bias voltage Vd has been switched to the second bias voltage Vd_{H}.

In an embodiment of this disclosure, the controller device 13 can switch the bias voltage Vd from the first bias voltage Vd_{L} to output the second bias voltage Vd_{H} based on different types of curves. Figs. 3A and 3B show switching through a nonlinear curve, for example, through the charge and discharge curve of an RC circuit. Other types of curves can be used instead. For example, a leading portion of a curve is very flat, that is, the bias voltage is at a very low level at the leading portion of the curve, in this case, the responsiveness of the receiver device to optical signals is very weak; and a subsequent portion of the curve rises rapidly, so that the bias voltage is rapidly increased and consequently the responsiveness of the receiver device to optical signals can be rapidly improved.

In a preferred embodiment of this disclosure, the receiver device includes a SiPM array. The SiPM array can output the electrical signal via the cathode, and the anode of the SiPM array is coupled to the controller device 13 to receive the first voltage VH and the second voltage VL, so as to be placed at the first bias voltage or the second bias voltage. Alternatively, the SiPM array outputs the electrical signal via a fast output, and the cathode of the SiPM array is coupled to the controller device 13 to receive the first voltage VH and the second voltage VL, so as to be under the effect of the first bias voltage or the second bias voltage. These cases can be described respectively in detail below.

In an embodiment of this disclosure, the receiver device 12 of the LiDAR 10 uses the SiPM shown in Fig. 1 as a photodetector. The SiPM uses dual voltage supplying power. As shown in Fig. 1, the cathode voltage is Vn and the anode voltage is Vp. Vn-Vp is equivalent to the bias voltage Vd applied to the SiPM. Therefore, the anode voltage Vp is increased so that the bias voltage Vd is decreased. When controlling the bias voltage of the SiPM, one of the cathode voltage Vn and the anode voltage Vp can be a constant voltage, and the bias voltage Vd can be changed by changing the other.

In the SiPM detection circuit used as shown in Fig. 1, the signal can be output from the cathode (common anode connection). In this case, due to the SiPM isolation, the bias voltage Vd is switched by controlling the anode voltage Vp, which causes less interference. The signal can also be output through the fast output port in the SiPM (common anode). In this case, the bias voltage Vd is switched by controlling the cathode voltage Vn, which causes less interference.

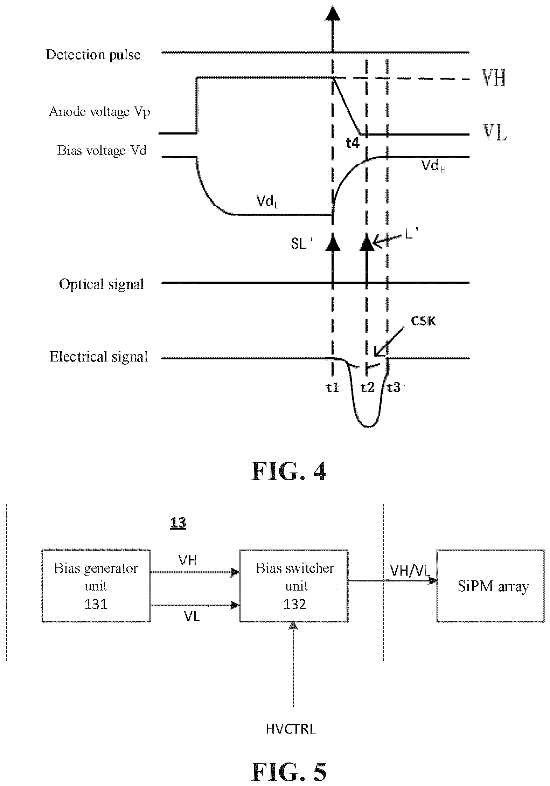

Take the example in which the cathode outputs signals and the anode controls bias switching as an example for illustration. Fig. 4 is a schematic diagram of distinguishing between stray light and signal light during the dynamic switching of the bias voltage of the SiPM. Vp is the anode voltage of the SiPM, and Vd is the bias voltage of the PN junction inside the SiPM. When in a stable state, the bias voltage of the PN junction inside the SiPM (i.e., the bias voltage Vd of the SiPM) is equivalent to Vn-Vp. Due to the charging and discharging time of the junction capacitor, the bias voltage Vd of the PN junction inside the SiPM has a particular delay time relative to the anode voltage Vp, causing the bias voltage Vd to be delayed by a particular period of time relative to the anode voltage Vp. The length of the delay time depends on the specification of the SiPM and has a typical value of around 15 ns. Fig. 4 shows the delay time, that is, the time length of t4-t3, where t4 is the time point when the anode voltage Vp switches to the second voltage VL, and t3 is the time point when the bias voltage Vd switches to the second bias voltage Vd_{H}. Also, t1 represents the time point of transmission of the detection pulse L, and t2 represents the time point of arrival of the echo L'.

In Fig. 4, the anode voltage Vp decreases linearly (it can also decrease nonlinearly, depending on the driving mode). The anode voltage Vp decreases linearly from the first voltage VH and switches to the second voltage VL. Due to the change of the bias, electrical crosstalk CSK (shown by the dotted line in the figure, which can be superimposed into the electrical signal) is generated in the electrical signal. Therefore, the faster the anode voltage Vp decreases, the greater the electrical crosstalk CSK generated. Therefore, the recovery time of the bias voltage of the SiPM needs to be appropriately changed. Preferably, the nonlinear curve can be the charge and discharge curve of the RC circuit, based on which the RC time constant is appropriately changed to change the recovery time of the bias voltage of the SiPM, so that the anode voltage Vp is slowly switched to suppress impact of the crosstalk due to switching of the bias voltage on the baseline. Also, because the short-range echo is strong, the responsiveness of the SiPM to the echo generated by short-range obstacles should not be too strong, thereby avoiding the saturation of SiPM.

In the figure, the first voltage VH and the second voltage VL are the two states of the anode voltage Vp. When Vp=VH, the bias voltage Vd of the SiPM is lower than the breakdown voltage of the PN junction inside the SiPM and the SiPM does not respond to incident light or has weak responsiveness. VL is the operating voltage of the SiPM. When Vp=VL, the bias voltage Vd of the SiPM is higher than the breakdown voltage of the PN junction inside the SiPM. SiPM can sufficiently respond to the incident light to achieve the detection function of the LiDAR.

At a specific time (e.g., 100 ns) before the time point of light emission, the anode voltage Vp is switched to VH, thereby ensuring that the SiPM can be completely turned off or at least partially turned off. Because at the light emission time (the timestamp t1), the bias voltage Vd of the SiPM is maintained at a lower level, that is, the first bias voltage Vd_{L} shown in the figure, the SiPM does not enter into Geiger mode and has almost no response to the stray light. Starting from the timestamp of light emission t1, the anode voltage Vp is gradually switched to the second voltage VL, so that the bias voltage Vd is gradually switched to the second bias voltage Vd_{H}. When the echo signal arrives (the timestamp t2), the anode voltage Vp has changed to the operating voltage VL, and the bias voltage Vd of the SiPM rises to a higher level, that is, close to the second bias voltage Vd_{H} shown in the figure. In this case, the SiPM has particular responsiveness, and can respond to the echo signal to generate an electrical signal. For example, because the short-range echo is stronger, the SiPM can already generate an echo signal when the voltage recovery time is 3 ns. The echo signal and the stray light signal can be distinguished, thereby improving the short-range blind zone.

When the SiPM array outputs electrical signals via the fast output, the change of the bias voltage Vd is consistent with the waveform of the bias voltage Vd shown in Fig. 4.

The operating principle of this disclosure has been described above, and the specific structures of the preferred embodiment of this disclosure are described in detail below.

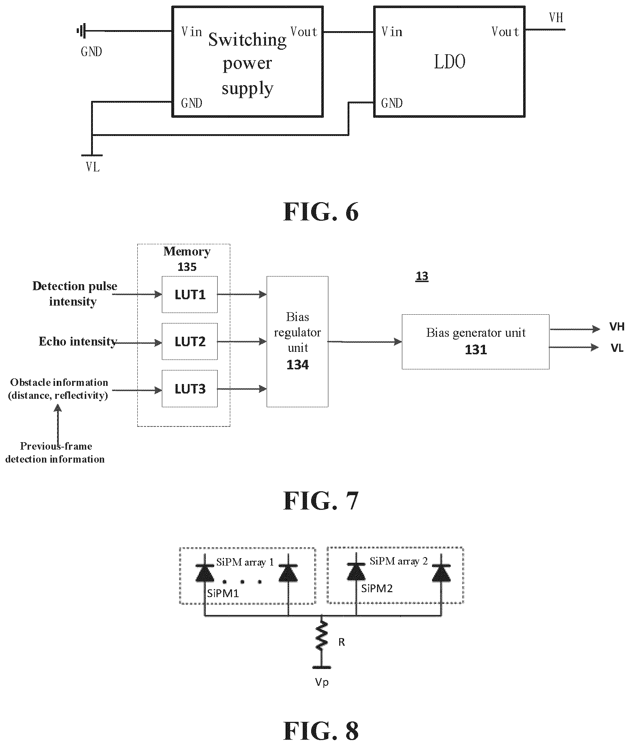

In an embodiment of this disclosure, as shown in Fig. 5, the controller device 13 includes a bias generator unit 131 and a bias switcher unit 132. The bias generator unit 131 is configured to output the first voltage VH and the second voltage VL. Fig. 6 shows a block diagram of the bias generator unit 131. As shown in Fig. 6, the bias generator unit 131 can include a switching power supply and a low dropout regulator ("LDO") for generating two anode voltages between which the SiPM needs to switch, that is, the first voltage VH and the second voltage VL. The second voltage VL is the reference voltage, and ground is used as the input voltage. The voltage is decreased through the switching power supply and the low dropout regulator ("LDO"), so that the voltage switches from ground to the first voltage VH. If the first voltage VH is connected to the anode of the SiPM, the bias voltage of the SiPM can be lower than the breakdown voltage. The SiPM exits the Geiger mode, and does not respond to light or has weak responsiveness. The low dropout regulator ("LDO") can filter the voltage signal output by the switching power supply and output the first voltage VH, thereby improving the quality of the power signal. The switching power supply is, for example, a buck-boost switching power supply, and the specific circuit structure is not be described again here.

The bias switcher unit 132 is coupled with the bias generator unit 131 to receive the first voltage VH and the second voltage VL, and can switch to output the first voltage VH or the second voltage VL based on the control signal HVCTRL. The first voltage VH or the second voltage VL is applied to the SiPM array, thereby achieving switching of the bias voltage Vd of the SiPM array. The control signal HVCTRL in Fig. 5 is, for example, associated with the timestamp of transmission t1 of the detection pulse. The control signal HVCTRL is generated at, before or after the timestamp of transmission t1, thereby triggering the bias switcher unit 132 to switch to output the first voltage VH or second voltage VL. The time when the control signal HVCTRL is generated is not limited to timestamp t1 when the transmitter device 11 transmits the detection pulse L. The control signal HVCTRL can be generated before the timestamp t1 or after the timestamp t1. In an embodiment of this disclosure, the timestamp t1 when the detection pulse L is transmitted is used as the reference, and the control signal HVCTRL is generated within a preset range before or after the timestamp t1, for example, within 3 ns before or after the timestamp t1, so as to ensure that the responsiveness of the receiver device 12 is weak when the stray light SL' arrives at the receiver device 12. These are all within the protection scope of this disclosure.

Those skilled in the art can easily understand that when the bias switcher unit 132 outputs the first voltage VH, the bias voltage Vd of the SiPM array is set to the first bias voltage Vd_{L}; and when the bias switcher unit 132 outputs the second voltage VL, the bias voltage Vd of the SiPM array is set to the second bias voltage Vd_{H}, which is equivalent to the bias switcher unit 132 switching to output the first bias voltage Vd_{L} and the second bias voltage Vd_{H} to the SiPM array.

Through the circuit structure shown in Fig. 5, the switching of the bias voltage Vd shown in Figs. 3 and 4 can be achieved, so that the bias switcher unit 132 outputs the first bias voltage Vd_{L} before the timestamp of transmission t1 of the detection pulse, and slowly switches to the second bias voltage Vd_{H} after the timestamp of transmission t1 of the detection pulse.

Fig. 7 shows a block diagram of a controller device 13 in a preferred embodiment of this disclosure, with the bias switcher unit 132 being omitted. As shown in Fig. 7, the controller device 13 further includes a bias regulator unit 134 and a memory 135. Multiple lookup tables, such as LUT1, LUT2, and LUT3 as shown in the figure, are stored in the memory. Each lookup table correspondingly stores the correspondence among one or more factors, and one or more of the first voltage VH (corresponding to the first bias voltage Vd_{L}) and the second voltage VL (corresponding to the second bias voltage Vd_{H}). Alternatively, each lookup table correspondingly directly stores the correspondence among the one or more factors, and one or more of the first bias voltage Vd_{L} and the second bias voltage Vd_{H}. The factors include but not limited to: detection pulse intensity, echo intensity, previous frame detection information, obstacle information (including distance, reflectivity, and other information), or the like. The echo intensity is the expected echo intensity, which is associated with the detection distance. The LiDAR can have channels for short-range measurement and channels for long-range measurement. For different channels that are used, the detection distances are different, and correspondingly, the expected echo intensities are also different. As shown in Fig. 7, the lookup table LUT1 stores the correspondence among the detection pulse intensity, and one or more of the first voltage VH and the second voltage VL, the lookup table LUT2 stores the correspondence among the echo intensity, and one or more of the first voltage VH and the second voltage VL, and the lookup table LUT3 stores the correspondence among the obstacle information (including distance, reflectivity, and other information), and one or more of the first voltage VH and the second voltage VL. The bias regulator unit determines one or more of the first voltage VH and the second voltage VL corresponding to the input factors by querying in the lookup tables, and provides the results to the bias generator unit 131. Based on the results, the bias generator unit 131 generates one or more of the first voltage VH and the second voltage VL. In this way, quantitative change of the bias voltage can be achieved.

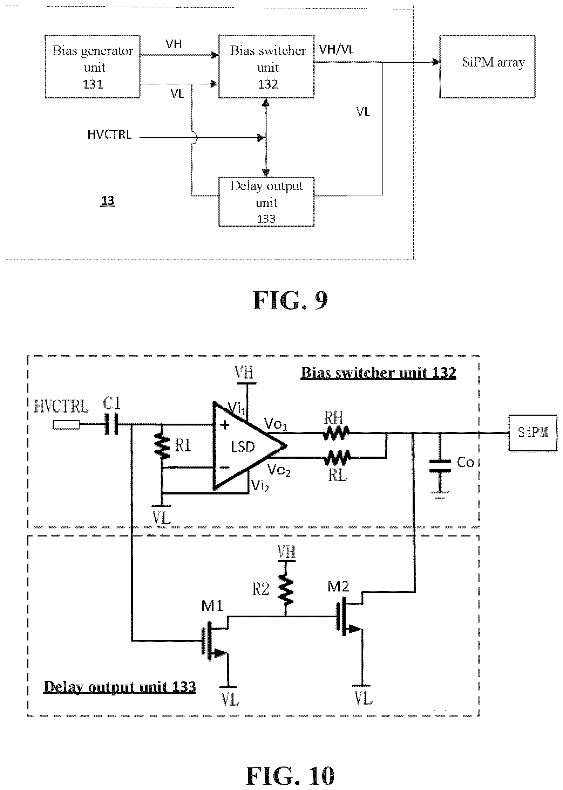

In a preferred embodiment of this disclosure, the receiver device 12 includes a plurality of SiPM arrays (e.g., including a plurality of one-dimensional linear SiPM arrays) and uses the cathode for output. The plurality of SiPM arrays are connected to the controller device 13 with a common anode to receive the first voltage VH and the second voltage VL and are consequently applied with the first bias voltage or the second bias voltage. Fig. 8 shows the connection mode of the SiPM arrays in an embodiment of this disclosure. As shown in Fig. 8, a plurality of SiPM arrays (two of which are schematically shown in Fig. 8) are included. The plurality of SiPM arrays are connected with a common anode, and the anodes of the plurality of SiPM arrays share a resistor R. When switching the bias voltage, crosstalk occurs between different SiPM arrays. For example, during switching the bias voltage of the SiPM arrays, after the first voltage VH is switched to the second voltage VL, the first bias voltage Vd_{L} is switched correspondingly to the second bias voltage Vd_{H}. The SiPM in SiPM array 1, for example, SiPM1 in Fig. 8, has parasitic capacitance, causing crosstalk to the SiPM (e.g., SiPM2) in another different one-dimensional line array (e.g., SiPM array 2) when SiPM1 receives the echo, which makes the SiPM in SiPM array 2 to measure the echo inaccurately. To mitigate or suppress this crosstalk problem, in an embodiment of this disclosure, the controller device 13 further includes a delay output unit 133. Fig. 9 shows such an embodiment, which are described in detail below with reference to Fig. 9.

As shown in Fig. 9, the controller device 13 further includes a delay output unit 133. The delay output unit 133 is coupled with the bias generator unit 131 and the receiver device (e.g., the SiPM array), and is configured to output the second voltage VL to the anode of the receiver device, that is, output the second bias voltage Vd_{H} to the receiver device in place of the bias switcher unit 132 when the bias switcher unit 132 outputs the second bias voltage Vd_{H}.

As shown in Fig. 9, the delay output unit 133 receives the control signal HVCTRL (e.g., a trigger signal associated with the timestamp of transmission t1 of the detection pulse), and receives the second voltage VL from the bias generator unit 131. The delay output unit 133 has the function of a delay switch. Before receiving the control signal HVCTRL, the delay output unit 133 is turned off. In this case, the bias switcher unit 132 provides the first voltage VH and the second voltage VL to the SiPM array. After receiving the control signal HVCTRL, and after an appropriate delay time, the delay output unit 133 is turned on. In this case, the delay output unit 133, in place of the bias switcher unit 132, outputs the second voltage VL to the SiPM array, that is, the bias voltage Vd of the SiPM is set to the second bias voltage Vd_{H}.

Therefore, in the embodiment of Fig. 9, the bias generator unit 131 is used to generate two anode voltages between which the SiPM needs to switch, that is, the first voltage VH and the second voltage VL, and the SiPM outputs a signal through the cathode. The bias switcher unit 132 is used to control the anode voltage of the SiPM to switch between VH and VL. The crosstalk to the baseline of the electrical signal is small, so the crosstalk due to bias switching can be suppressed and the receiving capability of the detector can be restored quickly. Fig. 10 shows the specific circuit structure of a bias switcher unit 132 and a delay output unit 133 in an embodiment of this disclosure. As shown in Fig. 10, the bias switcher unit 132 includes a low-side driver LSD and an output capacitor Co. The low-side driver is formed by, for example, an amplifier and is configured to switchably output the first voltage VH and the second voltage VL (corresponding to the first bias voltage Vd_{L} and the second bias voltage Vd_{H} respectively). The output capacitor Co is coupled between the output of the low-side driver LSD and the receiver device (i.e., the SiPM), and is configured to slowly switch the bias voltage of the receiver device 12 from the first bias voltage Vd_{L} to the second bias voltage Vd_{H}.

As shown in Fig. 10, the bias switcher unit 132 further includes a first resistor R1 and a first capacitor C1. The non-inverting input (+) of the amplifier of the low-side driver LSD is coupled to the control signal HVCTRL through the first capacitor C 1. The control signal HVCTRL is associated with the timestamp of transmission t1 of the detection pulse. For example, the control signal HVCTRL is generated at the timestamp of transmission t1 of the detection pulse. The first resistor R1 is connected in series between the non-inverting input (+) and the inverting input (-) of the amplifier, and the second voltage VL is applied to the inverting input (-) of the amplifier. The first voltage input Vii and the second voltage input Vi₂ of the amplifier receive the first voltage VH and the second voltage VL respectively from the bias generator unit 131 (see Fig. 9, not shown in Fig. 10). When the voltage across the first resistor R1 is higher than a particular threshold, the amplifier outputs the first voltage VH through the first voltage output Voi, to set the bias voltage Vd of the receiver device to the first bias voltage Vd_{L}; otherwise, the amplifier outputs the second voltage VL through the second voltage output Vo₂ to switch the bias voltage Vd of the receiver device to the second bias voltage Vd_{H}.

In an embodiment of this disclosure, the first voltage output Vo₁ of the amplifier of the low-side driver LSD is coupled to the receiver device (i.e., SiPM) and the output capacitor Co through a first driving resistor RH, and the second voltage output Vo₂ of the amplifier is coupled to the receiver device and the output capacitor Co through a second driving resistor RL.

Therefore, in the embodiment of Fig. 10, the bias switcher unit 132 includes a low-side driver LSD, a first resistor R1, a first capacitor C1, and an output capacitor Co. A control signal HVCTRL can be provided by a field programmable gate array ("FPGA") to control the low-side driver to output a first voltage VH or a second voltage VL. For example, when the control signal HVCTRL is at low level, the low-side driver LSD outputs the second voltage VL to the anode of the SiPM; and when the control signal HVCTRL is at high level, the low-side driver outputs the first voltage VH to the anode of the SiPM. The low-side driver LSD switches to output the first voltage VH or the second voltage VL based on whether the voltage across the first resistor R1 reaches the threshold Vth. When the voltage across the first resistor R1 is greater than the threshold Vth, the first voltage VH is output to the anode of the SiPM through the first driving resistor RH; and when the voltage across the first resistor R1 is less than or equal to the threshold Vth, the second voltage VL is output to the anode of the SiPM through the second driving resistor RL.

The first resistor R1 and the first capacitor C1 are used for alternating current ("AC") coupling and direct current ("DC") isolation. Setting the first capacitor C1 allows the low-side driver LSD to switch to output the first voltage VH or the second voltage VL to the anode of the SiPM based on the control signal HVCTRL, and prevents the DC component of the second voltage VL from acting on the FPGA for generating the control signal HVCTRL and causing damage to the FPGA.

The circuit structure of the bias switcher unit 132 is described above, and the circuit structure of the delay output unit 133 is described below.

As shown in Fig. 10, the delay output unit 133 includes a first switch M1, a second switch M2, and a second resistor R2. The gate of the first switch M1 is coupled to the control signal HVCTRL through a first capacitor C1, the source of the first switch M1 is coupled to the bias generator unit 131 (see Fig. 9, not shown in Fig. 10) to receive the second voltage VL, and the drain of the first switch M1 is coupled to the bias generator unit 131 through the second resistor R2 to receive the first voltage VH, and is connected to the gate of the second switch M2. The source of the second switch M2 is coupled to the bias generator unit 131 to receive the second voltage VL, and the drain of the second switch M2 is coupled to the receiver device (i.e., SiPM) and the output capacitor Co.

In the circuit of Fig. 10, the delay output unit 133 includes a first switch M1 and a second switch M2. The first switch M1 and the second switch M2 are preferably enhanced N-channel metal oxide semiconductors ("NMOSs"). When the control signal HVCTRL is at high level, the first switch M1 is turned on, the gate voltage of the second switch M2 is controlled to decrease, causing the second switch M2 to be turned off and enter into the high resistance state. When the control signal HVCTRL is at low level, the first switch M1 is turned off and the second switch M2 is turned on. Since the second resistor R2 as a pull-up resistor has a larger impedance and the second switch M2 has a gate capacitance, so that the gate voltage of the second switch M2 rises to provide the second voltage VL to the anode of the SiPM, that is, to output the second bias voltage Vd_{H} to the SiPM in place of the low-side driver LSD after the output of the low-side driver LSD is switched to the second voltage VL. Specifically, by setting the RC curve of the second resistor R2 and the second switch M2, the rising rate of the gate voltage of the second switch M2 is controlled, so that the gate voltage of the second switch M2 reaches the threshold after a particular period of time. In this case, the second switch M2 enters into the low resistance state, and the second switch M2 is turned on, so that the delay output unit 133 achieves the delay effect. Then, the voltage V_{GS} between the gate and the source of the second switch M2 is gradually increased, so that the on-impedance between the drain and the source of the second switch M2 gradually decreases, causing the delay output unit 133 to have low on-impedance, thereby providing the second voltage VL to the anode of the SiPM, that is, outputting the second bias voltage Vd_{H} to the SiPM, by the delay output unit 133.

Therefore, the delay output unit 133 is used to change the second driving resistor RL to a short-circuit state or a low resistance state after the bias switcher unit 132 switches to output the second voltage VL, and the delay output unit 133 provides the second voltage VL to the anode of the SiPM. Through setting the delay output unit 133, after the anode voltage Vp is switched to the second voltage VL, the common resistor in the bias switcher unit 132 is changed to a short-circuit state or a low-resistance state, to control the VL output of the bias generator unit 131 and the anodes of the SiPM arrays to be directly conducted with each other, so that different SiPMs do not interfere with each other when echo signal is generated.

When the output of the low-side driver LSD switches from the first voltage VH to the second voltage VL, the output capacitor Co discharges, so that the first voltage VH is slowly switched to the second voltage VL. That is, by appropriately setting the recovery time of the SiPM bias (specifically, the RC time of the second driving resistor RL and the output capacitor Co) to set a smaller bias change rate, the impact of the crosstalk CSK due to bias switching on the baseline can be mitigated. Also, due to the stronger short-range echo, the non-linear change curve has a faster rising speed in the initial section of the curve, so that the responsiveness of the SiPM can be restored faster, ensuring particular short-range responsiveness of the SiPM and avoiding the saturation.

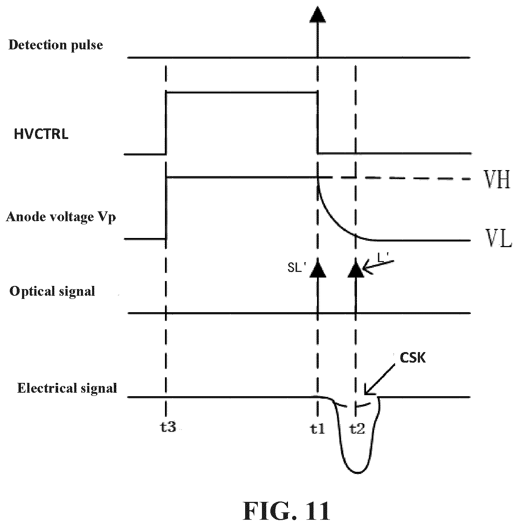

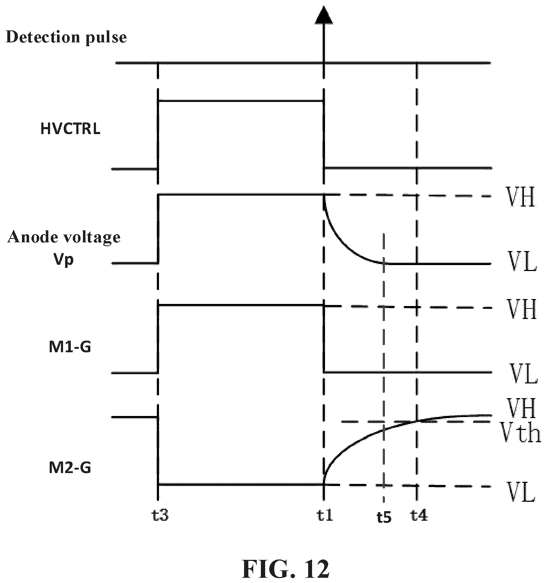

Fig. 11 shows a control timing diagram of the bias switcher unit 132, and Fig. 12 shows a control timing diagram of the delay output unit 133. The bias switcher unit 132 controls the anode voltage Vp of the SiPM to switch between the first voltage VH and the second voltage VL. In the operating state, HVCTRL is at low level, and the bias switcher unit 132 outputs the second voltage VL to the anode of the SiPM through the second driving resistor RL. The delay output unit 133 outputs the second voltage VL through the second switch M2. The duration time of the crosstalk CSK is the same as the time during the anode voltage Vp of the SiPM switches from the first voltage VH to the second voltage VL, that is, the time period t1-t3 as shown in Fig. 4.

In a preferred embodiment of this disclosure, about 100 ns before the timestamp of light emission t1 (timestamp t3), it can be ensured that the SiPM is completely turned off and the control signal HVCTRL is set to high level. The bias switching circuit 132 outputs the first voltage VH to the anode of the SiPM. The second switch M2 of the delay output unit 133 enters into the high resistance state, in this case, the SiPM responds extremely weakly to light. After the timestamp of light emission t1, the control signal HVCTRL is set to low level, and the bias switching circuit 132 outputs the second voltage VL through the second driving resistor RL. Under the action of the output capacitor Co, the anode voltage Vp of the SiPM starts to be slowly restored to the second voltage VL with a time constant of RL*C2, thus suppressing the impact of the crosstalk CSK due to bias switching on the baseline, and consequently restoring the responsiveness of the SiPM.

As shown in Fig. 12, during the time period t1-t4, the bias switcher unit 132 slowly switches to output the second voltage VL to the anode of the SiPM through the second driving resistor RL. After switching to the second voltage VL (after the timestamp t4), the delay output unit 133 provides the second voltage VL to the anode of the SiPM. The timestamp t4 corresponds to the time when the gate voltage of the second switch M2 reaches Vth. When the gate voltage of the second switch M2 is below Vth, the second switch M2 is in a high resistance state; and when the gate voltage of the second switch M2 is above Vth, the second switch M2 is in a low resistance state. The second switch M2 is turned on and provides the second voltage VL to the anode of the SiPM. Vth is determined by the RC curve formed by the second resistor R2 and the parasitic capacitance of the second switch M2. The rising rate of the gate voltage of the second switch M2 can be controlled by selectively setting the impedance of the second resistor.

Due to the impact of the second resistor R2 and the gate capacitance of the second switch M2, the delay output unit 133 gradually changes from the high resistance state to the low resistance state after a particular period of time (after the timestamp t4). By controlling the rising rate of the gate voltage of the second switch M2, the time between the time when the bias switcher unit 132 switches to the second voltage VL (the timestamp t5 in Fig. 12) and the time when the gate voltage of the second switch M2 reaches Vth (the timestamp t4 in Fig. 12) is shortened. That is, the time during which a plurality of one-dimensional line arrays share the second driving resistor RL is shortened as much as possible to mitigate the crosstalk problem caused by the resistor RL on the shared path. Otherwise, the output impedance is high and crosstalk is prone to occur.

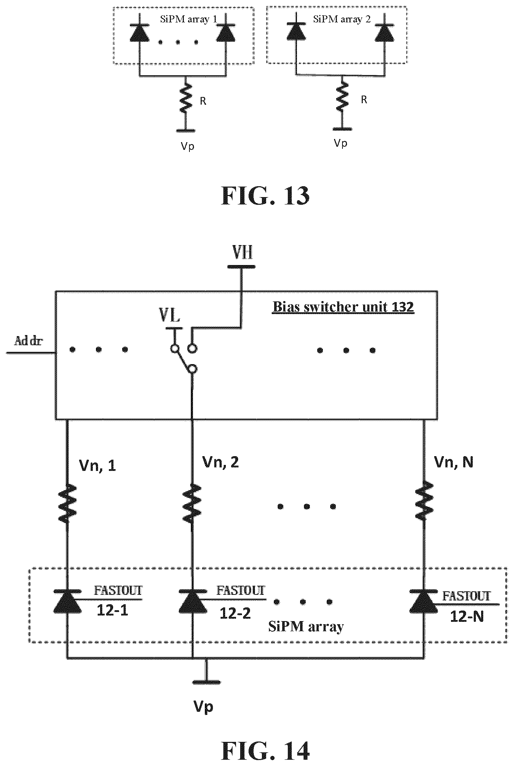

Fig. 13 shows the connection mode of the SiPM arrays in another embodiment of this disclosure, which can be used as an alternative to the embodiment of Fig. 8. As shown in Fig. 13, each SiPM array has its own common anode, and it is unnecessary to provide a delay output unit. This is because the anodes of different SiPM arrays do not share the resistor R. Therefore, for the connection mode of the SiPM arrays shown in Fig. 13, the controller device 13 shown in Fig. 5 can be used.

In Figs. 8 and 13, the SiPM uses a connection mode in which the cathode outputs the electrical signal. However, this disclosure is not limited to this. The SiPM can also output the electrical signal via a fast output, and the cathode of the SiPM array is coupled to the controller device to receive the first bias voltage or the second bias voltage.

In an embodiment of this disclosure, the receiver device 12 includes multiple receiver units. The bias switcher unit includes an address input, and the bias switcher unit is configured to select at least one receiver unit in the receiver device based on the address signal of the address input, and switch to output the second bias voltage. Fig. 14 illustrates such an embodiment.

As shown in Fig. 14, the SiPM array of the receiver device 12 includes multiple SiPMs, such as 12-1, 12-i, ..., 12-n shown in the figure, forming multiple channels. Each SiPM outputs an electrical signal through its fast output port FASTOUT. In this connection mode, the anode voltages Vp of the multiple SiPMs are constant, and the cathodes are coupled to the controller device to receive the first voltage VH and the second voltage VL, thereby setting the bias voltages of the SiPMs respectively to the first bias voltage or the second bias voltage.

As shown in Fig. 14, the bias switcher unit 132 includes an address input Addr. The address input can receive multiple codes corresponding to the address signal in parallel or in series. The bias switcher unit 132 selects at least one of the SiPMs 12-1, 12-i, ..., 12-N based on the address signal, and for the selected SiPM, switches the cathode voltage of this SiPM from VL to VH, so as to switch the bias voltage of the SiPM from the first bias voltage to the second bias voltage.

Therefore, in the embodiment of Fig. 14, the cathode voltage Vn of the SiPM is controlled to switch between the first voltage VH and the second voltage VL based on the address signal of the address input Addr, where VH is the operating voltage of the SiPM. The first driving resistor RH in Fig. 10A has a particular impedance. When switching to the first voltage VH, the second voltage VL is slowly switched to the first voltage VH through the first driving resistor RH and the output capacitor Co. The SiPM outputs signals through the FASTOUT. The SiPM in each channel of the SiPM array is independently gated to output a signal and controls bias switching. The address input Addr can control one of the channels in the SiPM array to perform bias switching. When the address input Addr selects the SiPM in the i-th channel, the cathode voltage Vn of the SiPM in the i-th channel switches from VL to VH, and the cathode voltage Vn of the SiPM in the i-1-th channel switches from VH to VL, where VH is a forward bias and VL is grounded, so that it is unnecessary to provide a delay unit.

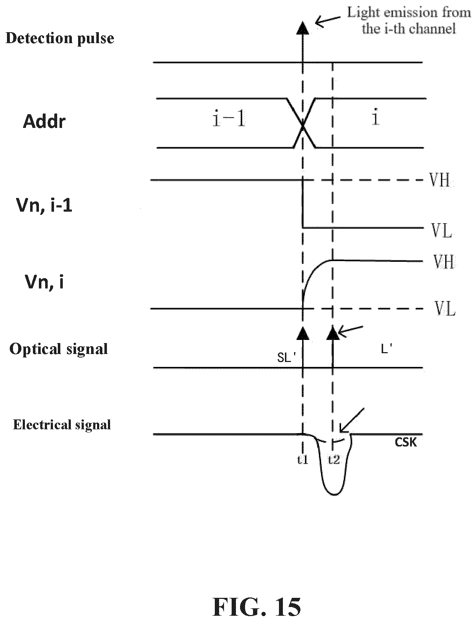

When in the non-operating state, the cathode voltage Vn of the SiPM in each channel is always connected to the second voltage VL, so the SiPM is turned off with almost no response to light. When the i-th channel emits light, the address input Addr is switched from the i-1-th channel to the i-th channel, the cathode voltage Vn of the SiPM in the i-th channel slowly switches from VL to VH, and the cathode voltage Vn of the SiPM in the i-1-th channel switches from VH to VL, so that the SiPM in the i-th channel restores its responsiveness. The switching timing and logic are shown in Fig. 15.

In a preferred embodiment of this disclosure, the second voltage VL and the first voltage VH can be dynamically changed, that is, one or more of the first bias voltage Vd_{L} and the second bias voltage Vd_{H} can be dynamically changed. For example, one or more of the first bias voltage Vd_{L} and the second bias voltage Vd_{H} can be changed based on one or more of multiple factors, including but not limited to: the intensity of the previous echo, the obstacle distance, the obstacle reflectivity, and the intensity of the detection pulse. For example, in a preferred embodiment of this disclosure, the controller device 13 is configured to change the second bias voltage Vd_{H} based on the intensity of the previous echo, and decrease the second bias voltage Vd_{H} as the intensity of the previous echo increases. In this embodiment, the bias voltage in the subsequent detection is changed based on the intensity of the previous echo signal for predetermination. If the intensity of the previous echo is higher, the second bias voltage Vd_{H} in the subsequent detection can be appropriately lower.

In a preferred embodiment of this disclosure, the controller device 13 is configured to calculate the obstacle distance based on the electrical signal, and the bias applicator unit is configured to change the second bias voltage based on the obstacle distance, and decrease the second bias voltage as the obstacle distance decreases. For different detection distances, expected intensity of the signal from the echo can be different, so that different second bias voltages can be set to avoid strong signal saturation and expand the signal dynamic range. Lowering the second bias voltage weakens the responsiveness of the SiPM, allowing stronger signals to fall within the linear response range, thereby expanding the dynamic range of the LiDAR.

In a preferred embodiment of this disclosure, the controller device is configured to change the first bias voltage based on the intensity of the detection pulse, and increase the first bias voltage as the intensity of the detection pulse decreases. For different light emission powers, the intensity of stray light is different, and the bias is set to be changeable. For example, when the light emission power becomes smaller, the first bias voltage can be increased so that the SiPM is not completely turned off. While controlling the amplitude of the signal from stray light, the amplitude of voltage fluctuation is reduced and particular subsequent receiving capability of the SiPM is maintained. In this embodiment, change of the first bias voltage based on the intensity of the detection pulse can suppress the crosstalk due to bias switching and restore the receiving capability of the detector quickly, allowing the SiPM to maintain more receiving capability in the OFF state (because the crosstalk to the baseline is small, the waiting time in response to and recognition of the signal becomes smaller).

During specific implementation, one or more of the first voltage VH and the second voltage VL can be generated by using a digital-to-analog converter ("DAC") to change the second bias voltage correspondingly. The turn-off bias and recovery time of bias change are changeable. The preset bias is changed through information feedback of light emission power and detection distance.

In the above embodiments of this disclosure, by dynamically turning off the SiPM before the time point of light emission and slowly restoring the voltage after the time point of light emission, the interference of the internal stray light to the SiPM can be reduced, and the echo signal can be received, thereby improving the short-range detection capability while retaining the long-range detection capability; and the slow restoration of the voltage suppresses the impact of crosstalk due to bias switching on the baseline.

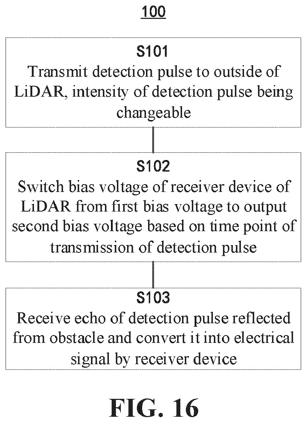

This disclosure also relates to a method 100 of three-dimensional detection using LiDAR, which is described in detail below with reference to Fig. 16.

In step S101, a detection pulse is transmitted to the outside of the LiDAR. The intensity of the detection pulse is changeable.

In step S102, the bias voltage of the receiver device of the LiDAR is switched from a first bias voltage to output a second bias voltage based on the time point of transmission of the detection pulse. The detection performance of the receiver device at the first bias voltage is lower than the detection performance at the second bias voltage.

In step S103, the echo of the detection pulse reflected from the obstacle is received and converted into an electrical signal by the receiver device.

In a preferred embodiment of this disclosure, the step S102 includes: switching the bias voltage from the first bias voltage to output the second bias voltage based on a nonlinear curve, for example, switching the bias voltage Vd from the first bias voltage Vd_{L} to output the second bias voltage Vd_{H} based on the curve shown in Fig. 4.

In a preferred embodiment of this disclosure, the method further includes changing one or more of the first bias voltage and the second bias voltage based on one or more of the intensity of the detection pulse, the obstacle distance, the obstacle reflectivity, and the detection distance.

In a preferred embodiment of this disclosure, the step S102 includes outputting the first bias voltage before the detection pulse is transmitted; and slowly switching to the second bias voltage after the detection pulse is transmitted.

In a preferred embodiment of this disclosure, the step S102 includes slowly switching to the second bias voltage after the detection pulse is transmitted.

In a preferred embodiment of this disclosure, the step S102 includes changing the second bias voltage based on the intensity of the previous echo, and decreasing the second bias voltage as the intensity of the previous echo increases.

In a preferred embodiment of this disclosure, the step S102 includes calculating the obstacle distance based on the electrical signal, and changing the second bias voltage based on the obstacle distance, and decreasing the second bias voltage as the obstacle distance decreases.

In a preferred embodiment of this disclosure, the step S102 includes changing the first bias voltage based on the intensity of the detection pulse, and increasing the first bias voltage as the intensity of the detection pulse decreases.

In a preferred embodiment of this disclosure, the method is performed by the LiDAR 100 as described above.

Finally, it should be noted that what described above are only the preferred embodiments of this disclosure, and not intended to limit this disclosure. Although this disclosure has been described in detail with reference to the foregoing embodiments, those skilled in the art can still modify the technical solutions described in the foregoing embodiments or substitute for some technical features equivalently. Any modification, equivalent substitution, improvement, or the like made within the spirit and principle of this disclosure shall fall within the protection scope of this disclosure.

## Claims

1. A LiDAR, comprising:
a transmitter device configured to transmit a detection pulse with changeable intensity;
a receiver device configured to receive an optical signal and be applied with a bias voltage to convert the optical signal into an electrical signal; and
a controller device configured to control the intensity of the detection pulse, apply a bias voltage to the receiver device, and switch the bias voltage from a first bias voltage to output a second bias voltage based on the time point of transmission of the detection pulse, wherein the detection performance of the receiver device at the first bias voltage is lower than the detection performance at the second bias voltage.

2. The LiDAR of claim 1, wherein the controller device is configured to switch the bias voltage from the first bias voltage to output the second bias voltage based on a nonlinear curve.

3. The LiDAR of claim 1 or 2, wherein the controller device is configured to change one or more of the first bias voltage and second bias voltage based on one or more of the intensity of the detection pulse, an obstacle distance, an obstacle reflectivity, and a detection distance.

4. The LiDAR of claim 3, wherein the controller device comprises a bias generator unit and a bias switcher unit, wherein the bias generator unit is configured to output the first bias voltage and the second bias voltage, and the bias switcher unit is coupled with the bias generator unit, and is configured to switch to output the first bias voltage or the second bias voltage based on the time point of transmission of the detection pulse.

5. The LiDAR of claim 4, wherein the bias switcher unit is configured to output the first bias voltage before the detection pulse is transmitted; and to slowly switch to the second bias voltage after the detection pulse is transmitted.

6. The LiDAR of claim 4, wherein the controller device further comprises a delay output unit, the delay output unit is coupled with the bias generator unit and the receiver device, and is configured to output the second bias voltage to the receiver device in place of the bias switcher unit when the bias switcher unit outputs the second bias voltage.

7. The LiDAR of claim 4, wherein the bias switcher unit comprises a low-side driver and an output capacitor, the low-side driver is configured to switchably output the first bias voltage and the second bias voltage, the output capacitor is coupled between the output of the low-side driver and the receiver device, and the output capacitor is configured to slowly switch the bias voltage from the first bias voltage to the second bias voltage.

8. The LiDAR of claim 7, wherein the bias switcher unit further comprises a first resistor and a first capacitor, wherein the low-side driver comprises an amplifier, a non-inverting input of the amplifier is coupled to a control signal through the first capacitor, the control signal is associated with the time point of transmission of the detection pulse, and the first resistor is connected in series between the non-inverting input and an inverting input of the amplifier, wherein when the voltage across the first resistor is higher than a threshold, the amplifier outputs a first bias voltage through a first voltage output; otherwise, the amplifier outputs a second bias voltage through a second voltage output.

9. The LiDAR of claim 8, wherein the first voltage output of the amplifier is coupled to the receiver device and the output capacitor through a first driving resistor, and the second voltage output of the amplifier is coupled to the receiver device and the output capacitor through a second driving resistor.

10. The LiDAR of claim 6, wherein the delay output unit comprises a first switch, a second switch, and a second resistor, wherein the gate of the first switch is coupled to the control signal through the first capacitor, the source of the first switch is coupled to the bias generator unit to receive the second bias voltage, the drain of the first switch is coupled to the bias generator unit through the second resistor to receive the first bias voltage and connected to the gate of the second switch, the source of the second switch is coupled to the bias generator unit to receive the second bias voltage, and the drain of the second switch is coupled to the receiver device.

11. The LiDAR of claim 4, wherein the receiver device comprises a plurality of receiver units, wherein the bias switcher unit comprises an address input, and the bias switcher unit is configured to select at least one receiver unit in the receiver device based on the address signal of the address input and switch to output the second bias voltage.

12. The LiDAR of claim 11, wherein the controller device is configured to slowly switch to the second bias voltage after the detection pulse is transmitted.

13. The LiDAR of claim 1 or 2, wherein the controller device is configured to change the second bias voltage based on the intensity of the previous echo, and decrease the second bias voltage as the intensity of the previous echo increases.

14. The LiDAR of claim 3, wherein the controller device is configured to calculate the obstacle distance based on the electrical signal, and a bias applicator unit is configured to change the second bias voltage based on the obstacle distance, and decrease the second bias voltage as the obstacle distance decreases.

15. The LiDAR of claim 3, wherein the controller device is configured to change the first bias voltage based on the intensity of the detection pulse, and increase the first bias voltage as the intensity of the detection pulse decreases.

16. The LiDAR of claim 1 or 2, wherein the receiver device comprises a SiPM array, wherein the SiPM array outputs the electrical signal via the cathode, and the anode of the SiPM array is coupled to the controller device to receive the first bias voltage or the second bias voltage; or the SiPM array outputs the electrical signal via a fast output, and the cathode of the SiPM array is coupled to the controller device to receive the first bias voltage or the second bias voltage.

17. The LiDAR of claim 16, wherein the receiver device comprises a plurality of SiPM arrays and uses the cathode for output, and the plurality of SiPM arrays are connected to the controller device with a common anode to receive the first bias voltage or the second bias voltage.

18. A method of three-dimensional detection using LiDAR, comprising:
S101: transmitting a detection pulse to the outside of the LiDAR, wherein the intensity of the detection pulse is changeable;
S102: switching the bias voltage of a receiver device of the LiDAR from a first bias voltage to output a second bias voltage based on the time point of transmission of the detection pulse, wherein the detection performance of the receiver device at the first bias voltage is lower than the detection performance at the second bias voltage; and
S103: receiving an echo of the detection pulse reflected from an obstacle and converting it into an electrical signal by the receiver device.

19. The method of claim 18, wherein the step S102 comprises: switching the bias voltage from the first bias voltage to output a second bias voltage based on a nonlinear curve.

20. The method of claim 18 or 19, further comprising: changing one or more of the first bias voltage and second bias voltage based on one or more of the intensity of the detection pulse, an obstacle distance, an obstacle reflectivity, and a detection distance.

21. The method of claim 20, wherein the step S102 comprises: outputting the first bias voltage before the detection pulse is transmitted; and slowly switching to the second bias voltage after the detection pulse is transmitted.

22. The method of claim 18, wherein the step S102 comprises: slowly switching to the second bias voltage after the detection pulse is transmitted.

23. The method of claim 18, wherein the step S102 comprises: changing the second bias voltage based on the intensity of the previous echo, and decreasing the second bias voltage as the intensity of the previous echo increases.

24. The method of claim 18, wherein the step S102 comprises: calculating the obstacle distance based on the electrical signal, and changing the second bias voltage based on the obstacle distance, and decreasing the second bias voltage as the obstacle distance decreases.

25. The method of claim 18, wherein the step S102 comprises: changing the first bias voltage based on the intensity of the detection pulse, and increasing the first bias voltage as the intensity of the detection pulse decreases.
